# EUROPEAN PATENT APPLICATION

(11) **EP 2 907 566 A1**
(43) Date of publication of application: **19.08.2015**
(21) Application number: 15151277.9
(22) Date of filing: 15.01.2015
(51) Int. Cl.: B01J 8/04

(54) **Improved apparatus and method for manufacturing a reformed fuel**

(30) Priority: 13.02.2014 KR 20140016480
(71) Applicant: Bio Hitech Energy Co., Chestnut Ridge, NY 10977 (US)
(72) Inventor: Koh, Chun Il, 000-000 Seoul (KR); Hasegawa, Shinji, Tokyo, 000-000 (JP)
(74) Representative: Isarpatent

(57) **Abstract**

There is provided a reformed fuel manufacturing apparatus, including one or more water tanks configured to pretreat introduced water by using a water tank catalyst; one or more oil tanks configured to pretreat introduced oil by using an oil tank catalyst; a mixing tank connected to the one or more water tanks and the one or more oil tanks, and configured to produce a mixed oil by agitating the pretreated water introduced from the one or more water tanks and the pretreated oil introduced from the one or more oil tanks; and an ionization catalyst unit connected to the mixing tank and configured to convert the mixed oil, which is introduced from the mixing tank, to a reformed fuel by using an ionization catalyst.

## Description

### FIELD OF THE INVENTION

The various embodiments described herein pertain generally to an improved apparatus and method for manufacturing a reformed fuel.

### BACKGROUND OF THE INVENTION

Recently, exhaustion of fossil fuel and generation of green house gases have arisen as worldwide problems.

In order to solve the problems, Japanese Patent Laid-open Publication No. 2011-03800 (titled "Fuel Manufacturing Method"), which was filed by the present inventor, describes a method and apparatus for manufacturing an emersion fuel that can be atomized and exhibits high applicability and high stability. In this method and apparatus, water and an oil fuel such as diesel, kerosene or heavy oil are supplied into a space to which a magnetic field is applied. In that space, the water and the oil fuel are atomized and mixed with each other, so that an emersion fuel is produced.

In such a conventional fuel manufacturing method and apparatus, however, since the fuel is in the form of emersion, water-oil separation may occur and a water component may be left. As a consequence, a flash point would be greatly increased, whereas a calorific power would be decreased, resulting in a failure to reduce the consumption of the fossil fuel greatly.

In an attempt to solve the problem, the present inventor has filed Korean Patent No. 1328151 (titled "Apparatus for Manufacturing a Reformed Fuel and a Method for Manufacturing the Same"). In this method and apparatus, water is atomized by applying an ultrasonic wave or an electric field to a water tank, and hydrogen peroxide is decomposed by supplying enzyme from an enzyme tank. Accordingly, water and oil are allowed to be easily mixed with each other without separated. Thus, it is possible to suppress the aforementioned problems of the reformed fuel in the form of emersion, such as an increase of a flash point and a decrease of a calorific power.

However, this conventional apparatus and method for manufacturing a reformed fuel involves a complicated process, and there is difficulty in managing enzyme in the enzyme tank. Further, since the apparatus has a complicated structure adapted to apply the ultrasonic wave and the electric field, manufacturing cost is high and repair and maintenance of the apparatus is not easy.

### SUMMARY

In view of the foregoing problems, example embodiments provide an improved apparatus and method for manufacturing a reformed fuel through a simplified process and structure, thus enabling manufacturing cost cut and easy repair and maintenance.

However, the problems sought to be solved by the present disclosure are not limited to the above description and other problems can be clearly understood by those skilled in the art from the following description.

In accordance with a first aspect of an illustrative embodiment, there is provided a reformed fuel manufacturing apparatus including one or more water tanks configured to pretreat introduced water by using a water tank catalyst; one or more oil tanks configured to pretreat introduced oil by using an oil tank catalyst; a mixing tank connected to the one or more water tanks and the one or more oil tanks, and configured to produce a mixed oil by agitating the pretreated water introduced from the one or more water tanks and the pretreated oil introduced from the one or more oil tanks; and an ionization catalyst unit connected to the mixing tank and configured to convert the mixed oil, which is introduced from the mixing tank, to a reformed fuel by using an ionization catalyst.

In accordance with a second aspect of the illustrative embodiment, there is provided a reformed fuel manufacturing method including preparing pretreated water by pretreating water supplied in a water tank by a water tank catalyst; preparing pretreated oil by pretreating oil supplied in an oil tank by an oil tank catalyst; producing a mixed oil by agitating, in a mixing tank, the pretreated water introduced from the water tank and the pretreated oil introduced from the oil tank; and converting, in an ionization catalyst unit, the mixed oil introduced from the mixing tank to a reformed fuel by using an ionization catalyst.

In accordance with the illustrative embodiments, water is pretreated in the water tank by using tourmaline mineral, and oil is pretreated in the oil tank by using the tourmaline mineral. Accordingly, the process can be simplified, and manufacturing cost can be cut. Further, repair and maintenance of the apparatus can be eased.

In addition, by providing the ionization catalyst cartridges connected to the reformed fuel storage tank, it is possible to manufacture a high-quality reformed fuel more efficiently.

### BRIEF DESCRIPTION OF THE DRAWINGS

In the detailed description that follows, embodiments are described as illustrations only since various changes and modifications will become apparent from the following detailed description. The use of the same reference numbers in different figures indicates similar or identical items.
**FIG. 1** is a plane view of an improved reformed fuel manufacturing apparatus in accordance with an example embodiment;
**FIG. 2** is a schematic side view of a water tank in accordance with the example embodiment;
**FIG. 3** is a schematic side view of an oil tank in accordance with the example embodiment;
**FIG. 4** is a schematic diagram for describing a water pretreatment process in accordance with the example embodiment;
**FIG. 5** is a schematic diagram for describing an oil pretreatment process in accordance with the example embodiment;
**FIG. 6** is a schematic side view of a mixing tank in accordance with the example embodiment;
**FIG. 7** is a schematic diagram for describing a manufacture of a mixed oil and a reformed fuel in accordance with the example embodiment;
**FIG. 8** is a schematic diagram for describing a post-treatment of the reformed fuel produced in accordance with the example embodiment; and
**FIG. 9** is a flowchart for describing an improved reformed fuel manufacturing method in accordance with the example embodiment.

### DETAILED DESCRIPTION

Hereinafter, example embodiments will be described in detail so that inventive concept may be readily implemented by those skilled in the art. However, it is to be noted that the present disclosure is not limited to the illustrative embodiments and examples but can be realized in various other ways. In drawings, parts not directly relevant to the description are omitted to enhance the clarity of the drawings, and like reference numerals denote like parts through the whole document.

Through the whole document, the term "on" that is used to designate a position of one element with respect to another element includes both a case that the one element is adjacent to the another element and a case that any other element exists between these two elements.

Through the whole document, the term "comprises or includes" and/or "comprising or including" used in the document means that one or more other components, steps, operation and/or existence or addition of elements are not excluded in addition to the described components, steps, operation and/or elements unless context dictates otherwise. The term "about or approximately" or "substantially" are intended to have meanings close to numerical values or ranges specified with an allowable error and intended to prevent accurate or absolute numerical values disclosed for understanding of the present disclosure from being illegally or unfairly used by any unconscionable third party. Through the whole document, the term "step of" does not mean "step for".

Hereinafter, example embodiments will be described in detail with reference to the accompanying drawings, which form a part hereof.

First, an improved reformed fuel manufacturing apparatus 10 (hereinafter, referred to as "the present reformed fuel manufacturing apparatus 10") in accordance with an example embodiment will be elaborated.

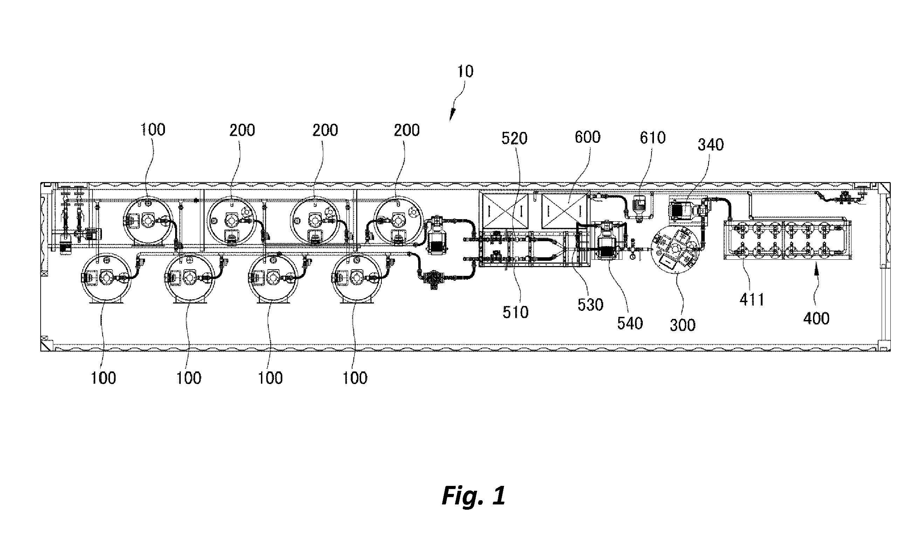

Referring to **FIG. 1****,** a configuration of the present reformed fuel manufacturing apparatus 10 will be explained.

As depicted in **FIG. 1****,** the present reformed fuel manufacturing apparatus 10 includes one or more water tanks 100, one or more oil tanks 200, a mixing tank 300 and an ionization catalyst unit 400.

Each water tank 100 is configured to pretreat water introduced therein by using a water tank catalyst. The water tank 100 may be supplied with water from a water supply pump 101.

Each oil tank 200 is configured to pretreat oil introduced therein by using an oil tank catalyst. The oil tank 200 may be supplied with oil from an oil supply pump 201.

The mixing tank 300 is connected to the water tank 100 and the oil tank 200. The mixing tank 300 is configured to agitate therein the pretreated water introduced from the water tank 100 and the pretreated oil introduced from the oil tank 200, thus producing a mixed oil.

That is, the mixing tank 300 produces the mixed oil by agitating the pretreated water from the water tank 100 and the pretreated oil from the oil tank 200.

The ionization catalyst unit 400 is connected to the mixing tank 300. The ionization catalyst unit 400 is configured to generate a reformed fuel from the mixed oil, which is introduced from the mixing tank 300, by using an ionization catalyst.

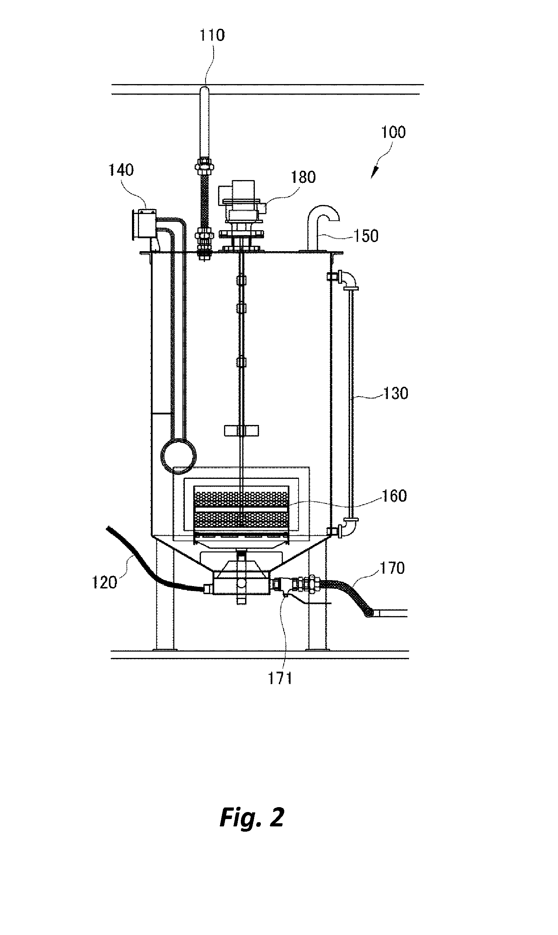

Referring to **FIG. 2**, the water tank 200 in accordance with the example embodiment will be elaborated in further detail.

The water tank 100 includes a water inlet line 110, an air supply line 120, a water heater 140, a water level measurer 130, an air vent 150, a water tank catalyst cartridge 160, a water agitator 180 and a water outlet line 170.

The water inlet line 110 delivers water from the outside into the water tank 100 through the water supply pump 101.

The air supply line 120 supplies air into the water tank 100. The air supply line 120 may be fastened to a bottom portion of the water tank 100 such that the air is introduced into the water tank 100 from below the water tank 100.

The air supplied through the air supply line 120 generates bubbles in the water within the water tank 100. The bubbles allow the water and a water tank catalyst to come into contact with each other more effectively.

The water heater 140 is provided to maintain an ideal temperature for the pretreatment of the water by the water tank catalyst. By way of non-limiting example, the ideal temperature for the pretreatment of the water by the water tank catalyst may be in the range of, e.g., about 25°C to about 30°C.

The water level measurer 130 is configured to measure a water level within the water tank 100.

The water level information obtained by the water level measurer 130 may be sent to a main controller (not shown). The main controller adjusts the water level within the water tank 100 by checking the water level information and controlling an operation of the water supply pump 101.

The air vent 150 is provided to prevent a pressure rise within the water tank 100 that might be caused by the air supplied from the air supply line 120. The air vent 150 may be implemented by a pipe through which the air within the water tank is exhausted.

The water tank catalyst cartridge 160 stores therein the water tank catalyst. The water tank catalyst is brought into contact with the water, so that the pretreatment of the water is performed. By way of example, the water tank catalyst cartridge 160 may be provided at a central portion, e.g., a lower central portion within the water tank 100.

Here, the water tank catalyst may include a first water tank catalyst containing a tourmaline mineral such as tourmaline raw stone; and a second water tank catalyst containing at least one of silicon dioxide, a silicate mineral and a halogen mineral.

By way of example, the second water tank catalyst may be a spherical catalyst containing silicon dioxide, a silicate mineral and a halogen mineral, having a diameter of, but not limited to, about 1 cm.

The water within the water tank 100 may be turned into hydrogen water through the first water tank catalyst and the second water tank catalyst, and dissolved oxygen in the water may also be eliminated.

To be more specific, a tourmaline mineral has a piezoelectric effect and a pyroelectric effect. The tourmaline mineral also has an effect as an absorption polarizer, an electromagnetic radiation effect, a far infrared ray effect, an ionization effect, etc. Radiation of electromagnetic wave is begun as the tourmaline mineral is put into water. As the tourmaline mineral comes into contact with water molecules, coupling of the water molecules can be loosened.

In order to facilitate such functions of the tourmaline as a catalyst, it may be desirable to heat the water by using the water heater 140 while agitating the water by using the water agitator 180.

As described above, the pretreated water is produced by the contact between the water tank catalyst and the water in the water tank 100. A pH of the pretreated water may be about 7.5, and an ORP (Oxidation-Reduction Potential) may be maintained at about 90 to about 100.

The water agitator 180 is configured to agitate the water within the water tank 100. By way of example, the water agitator 180 may be a water agitating motor, which may be installed at an upper central portion of the water tank 100. As the water is agitated by the water agitator 180, the contact between the water and the water tank catalyst can enhanced.

Especially, if the supply of the air from the air supply line and the agitation of the water by the water agitator 180 are continuously performed, the contact between the water and the water tank catalyst can be more enhanced. That is, the pretreatment of the water can be performed more smoothly and rapidly.

The water outlet line 170 transfers the pretreated water into the mixing tank 300 to be described later. For example, the pretreated water may be transferred into the water outlet line 170 through a water outlet control valve 171 provided at a lower portion of the water tank 100.

The completion of the pretreatment of the water may be determined by the main controller. Further, the main controller may also control the opening and closing of the water outlet control valve 171.

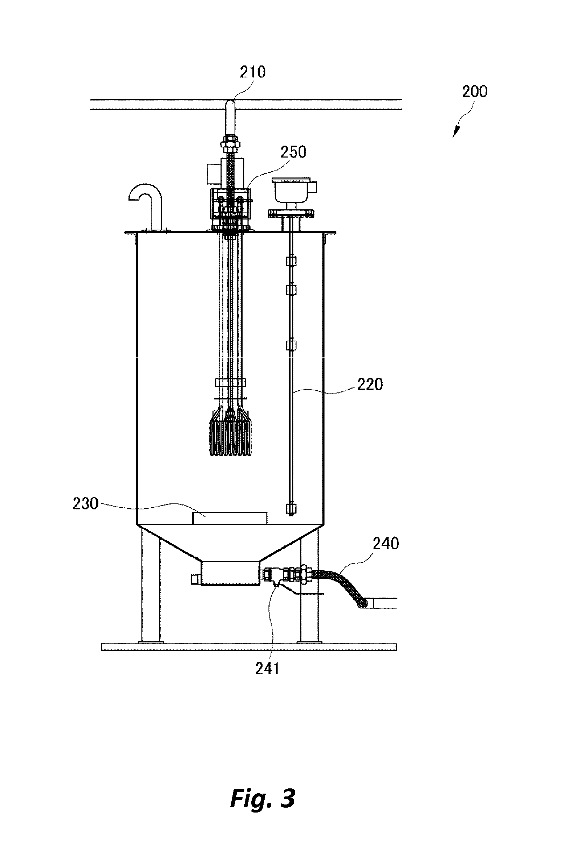

Referring to **FIG. 3**, the oil tank 200 in accordance with the example embodiment will be elaborated in detail.

The oil tank 200 includes an oil inlet line 210, an oil level measurer 220, an oil tank catalyst cartridge 230, an oil outlet line 240 and an oil agitator 250.

The oil inlet line 210 delivers oil from the outside into the oil tank 200 through the oil supply pump 201.

The oil level measurer 220 is configured to measure an oil amount, *i.e.,* an oil level within the oil tank 200.

The oil level information obtained by the oil level measurer 220 may be sent to the main controller. The main controller adjusts the oil level within the oil tank 200 by checking the oil level information and controlling an operation of the oil supply pump 201.

The oil tank catalyst cartridge 230 stores therein an oil tank catalyst. The oil tank catalyst is brought into contact with the oil, so that the pretreatment of the oil is performed. By way of example, the oil tank catalyst cartridge 230 may be provided at a central portion, e.g., a lower central portion within the oil tank 200.

Here, the oil tank catalyst may include a first oil tank catalyst containing a tourmaline mineral such as tourmaline raw stone; and a second oil tank catalyst containing at least one of silicon dioxide, a silicate mineral and a halogen mineral.

By way of example, the second oil tank catalyst may be, like the second water tank catalyst, a spherical catalyst containing silicon dioxide, a silicate mineral and a halogen mineral, having a diameter of, but not limited to, about 1 cm.

Due to the oil tank catalyst, static electricity is generated in the oil within the oil tank 200, and this static electricity makes carbon in the oil easily coupled to hydrogen in the pretreated water molecules.

The oil outlet line 240 delivers the pretreated oil into the mixing tank 300 to be described later. For example, the pretreated oil may be transferred into the oil outlet line 240 through an oil outlet control valve 241 provided at a lower portion of the oil tank 200.

Completion of the pretreatment of the oil may be determined by the main controller. Further, the main controller may also control the opening and closing of the oil outlet control valve 241.

The oil agitator 250 is configured to agitate the oil within the oil tank 200. By way of non-limiting example, the oil agitator 250 may be an oil agitating motor, which is installed at an upper central portion of the oil tank 200. As the oil is agitated by the oil agitator 250, the contact between the oil and the oil tank catalyst may be enhanced.

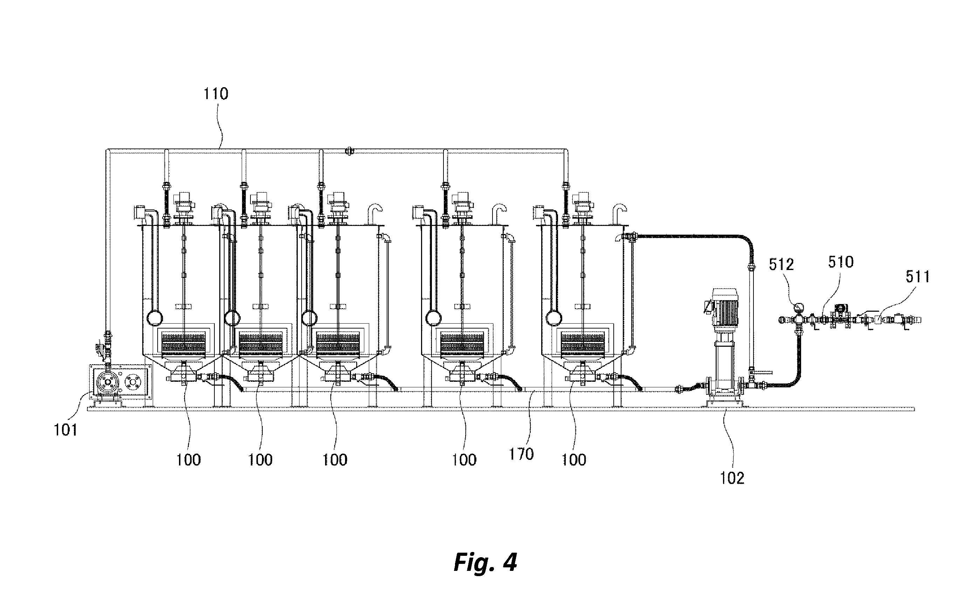

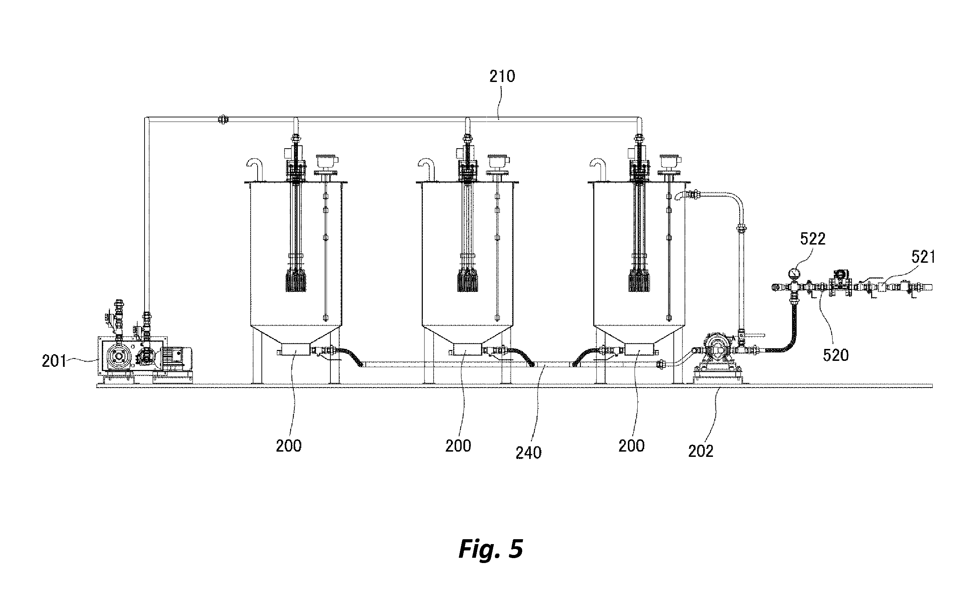

Referring to **FIG. 4** and **FIG. 5**, a process of pretreating the water, a process of pretreating the oil and a process of introducing the mixture of the pretreated water and the pretreated oil into the mixing tank 300 will be explained.

The present reformed fuel manufacturing apparatus 10 may include a multiple number of water tanks 100 and a multiple number of oil tanks 200.

As stated above, the water supply pump 101 may be configured to supply the water fed from the outside into each of the water tank 100 through the water inlet line 110. Each water tank 100 pretreats the supplied water and then supplies the pretreated water into the mixing tank 300 through the water outlet line 170.

The oil supply pump 201 may be configured to supply the oil fed from the outside into each oil tank 200 through the oil inlet line 210. Further, each oil tank 200 pretreats the supplied oil and then supplies the pretreated oil into the mixing tank 300 through the oil outlet line 240.

Here, the process of pretreating the water takes more time than the process of pretreating the oil. Thus, in order to keep a balance between the amount of the water pretreated in the water tanks 100 and the amount of the oil pretreated in the oil tanks 200, it may be desirable that the number of the water tanks 100 is more than the number of the oil tanks 200. By way of example, referring to **FIG. 1**, there may be provided five water tanks 100 and three oil tanks 200.

Referring to **FIG. 4****,** the pretreated water from each water tank 100 is directed into a water mixing pump 102 after passing through the water outlet line 170. Then, the water pressurized by the water mixing pump 102 may be supplied into a water supply line 510 via a water flowmeter 512. The water flowmeter 512 is configured to measure a flow rate of the water. That is, the water supply line 510 may be equipped with the water flowmeter 512 capable of measuring the flow rate of the pretreated water introduced from the water tank 100.

Referring to **FIG. 5****,** the pretreated oil from each oil tank 200 is directed into an oil mixing pump 202 after passing through the oil outlet line 240. Then, the oil pressurized by the oil mixing pump 202 may be supplied into an oil supply line 520 via an oil flowmeter 522. That is, the oil supply line 520 may be equipped with the oil flowmeter 522 capable of measuring a flow rate of the pretreated oil introduced from the oil tank 200.

The water flowmeter 512 and the oil flowmeter 522 measure the flow rate of the pretreated water and the flow rate of the pretreated oil supplied into the mixing tank 300, respectively. Further, the main controller may adjust a ratio between the pretreated water and the pretreated oil through the use of a value or the like based on measurements of the water flowmeter 512 and the oil flowmeter 522.

Desirably, a ration between an inflow rate of the pretreated water and an inflow rate of the prostrated oil supplied into the mixing tank 300 may be about 1:1.

Further, referring back to **FIG. 4****,** the water supply line 510 may include an inline water mixer 511 having a multiple number of protrusions on an inner surface thereof in order to produce turbulence in the water passing through the water supply line 510. Through this turbulence, water molecules passing through the inline water mixer 511 are allowed to have greater movement.

Further, referring to **FIG. 5****,** the oil supply line 520 may include an inline oil mixer 521 having a multiple number of protrusions on an inner surface thereof in order to produce turbulence in the oil passing through the oil supply line 520. Through this turbulence, oil molecules passing through the inline oil mixer 521 are allowed to have greater movement.

Referring back to **FIG. 1****,** the pretreated water having passed through the water supply line 510 and the pretreated oil having passed through the oil supply line 520 may be supplied into the mixing tank 300 after mixed in a mixed oil supply line 530.

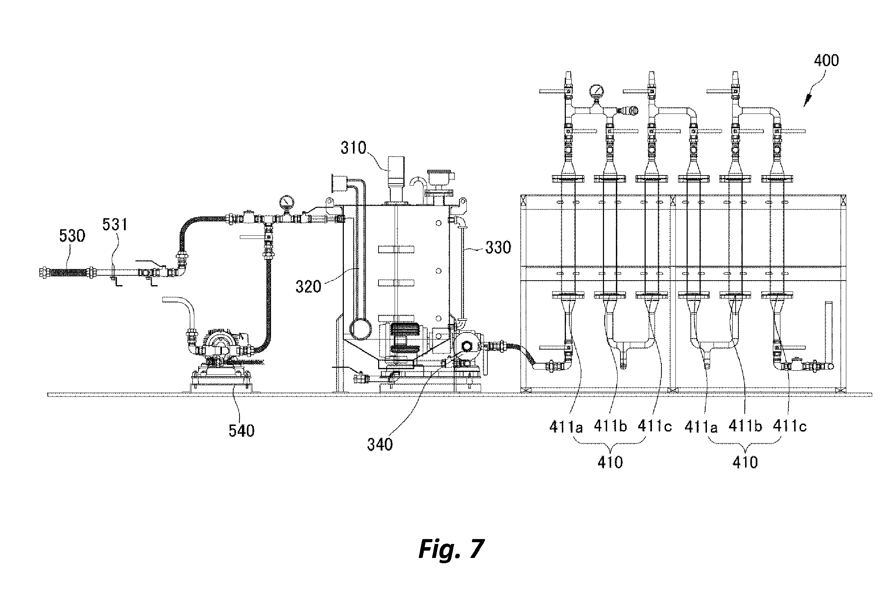

Further, referring to **FIG. 7****,** the mixed oil supply line 530 may include an inline water and oil mixer 531 that generates turbulences in the water and the oil passing through the mixed oil supply line 530. The inline water and oil mixer 531 may have a multiple number of protrusions on an inner surface thereof. That is, the water supply line 510 and the oil supply line 520 join to the mixed oil supply line 530 as a single line. The pretreated water and the pretreated oil that meet in the mixed oil supply line 530 are physically mixed again effectively while they pass through the inline water and oil mixer 531.

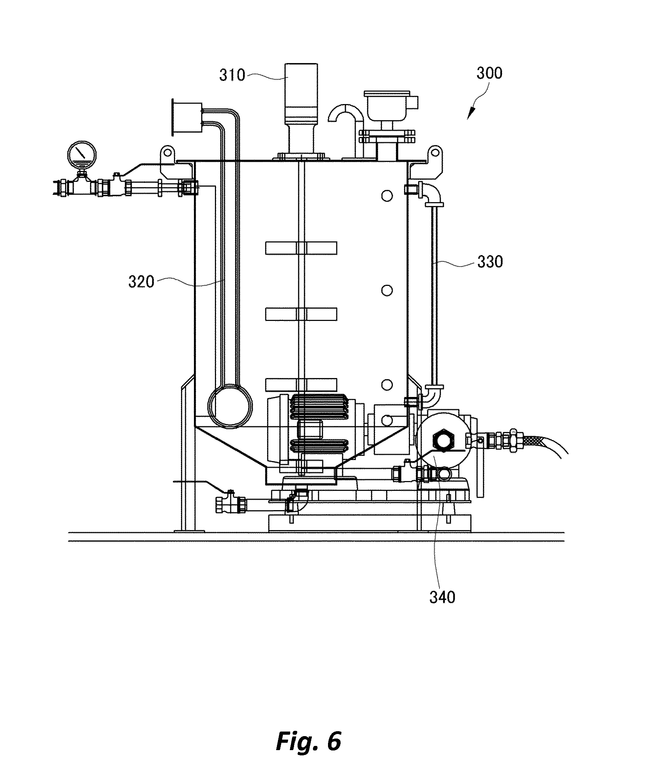

Referring to **FIG. 6****,** the mixing tank 300 in accordance with the example embodiment will be described in detail.

The mixing tank 300 in accordance with the example embodiment is configured to mix the pretreated water and the pretreated oil supplied through the mixed oil supply line 530.

For the purpose, the mixing tank 300 includes a mixed oil agitator 310, a mixed oil heater 320, a mixed oil level measurer 330 and a mixed oil pump 340.

The mixed oil agitator 310 is configured to agitate the pretreated water and the pretreated oil introduced into the mixed oil tank 300 such that they are mixed with each other effectively. By way of example, the mixed oil agitator 310 may include a motor at an upper portion thereof; and a blade configured to mix the oil and the water. The blade may be rotated at, but not limited to, about 250 rpm to mix the oil and the water uniformly.

For example, the mixed oil may stay in the mixing tank 300 for about 5 minutes or less, during which the mixed oil may be more uniformly mixed by the agitating operation of the mixed oil agitator 310.

The mixed oil heater 320 may be configured to maintain a temperature of the mixed oil within a preset range to allow the pretreated water and the pretreated oil to be mixed with each other effectively. Desirably, the temperature of the mixed oil may be maintained in the range from, *e.g*., about 25°C to about 35°C.

The mixed oil level measurer 330 is configured to measure a level of the mixed oil. A measurement result of the mixed oil level measurer 330 is continuously monitored by the main controller. The main controller may control an inflow and an outflow of the mixed oil based on this measurement result.

The mixed oil pump 340 is configured to supply the mixed oil mixed in the mixing tank 300 to the ionization catalyst unit 400 to be described in detail below. For example, the mixed oil pump 340 may be configured to supply a regular amount of mixed oil to the ionization catalyst unit 400 continuously. Further, the mixed oil pump 340 may be implemented by, but not limited to, a trochoid pump.

Referring to **FIG. 7****,** the ionization catalyst unit 400 in accordance with the example embodiment will be described in detail.

The ionization catalyst unit 400 may include one or more ionization catalyst groups 410, and each ionization catalyst group 410 may include a multiplicity of ionization catalyst cartridge 411.

In a configuration where a plurality of ionization catalyst groups 410 is provided, these ionization catalyst groups 410 may be connected to each other in series or in parallel so as to allow the mixed oil to pass through an ionization catalyst repeatedly. For example, the ionization catalyst groups 410 may be connected in series or in combination of in series and in parallel.

By way of example, referring to **FIG. 1** and **FIG. 7**, twelve ionization catalyst cartridges 411 are connected in combination of in series and in parallel. To be more specific, four ionization catalyst groups 410, each of which has three ionization catalyst cartridges 411, may be provided. These four ionization catalyst groups 410 may be connected in combination of in series and in parallel, as depicted in **FIG. 1**.

As described above, as the plurality of ionization catalyst groups 410 are connected in series, the mixed oil is made to pass through the ionization catalyst groups 410 repeatedly, so that the mixed oil can be converted to a reformed fuel with higher efficiency.

Meanwhile, the ionization catalyst may include, but not limited to, alumina, silica gel, germanium, magnesia, magnesium, titanium oxide, Tomuro stone, zeolite, lithium ore and vanadium as main components. By way of example, the ionization catalyst cartridge 411 may be implemented in the form of a pipe charged with a spherical catalyst containing, but not limited to, alumina, silica gel, germanium, magnesia, magnesium, titanium oxide, Tomuro stone, zeolite, lithium ore and vanadium as main components. For example, a diameter of the spherical catalyst may be, *e.g*., about 1 cm.

The multiplicity of ionization catalyst cartridges 411 may be classified into three kinds depending on which catalyst material is added to the aforementioned main components of the ionization catalyst.

That is, the multiplicity of ionization catalyst cartridges 411 incorporated in each ionization may include a first ionization catalyst cartridge 411a, a second ionization catalyst cartridge 411b and a third ionization catalyst cartridge 411c.

By way of example, referring to **FIG. 1** and **FIG. 7**, the ionization catalyst unit 400 may be comprised of four ionization catalyst groups 410 connected in combination of in series and in parallel, and each ionization catalyst group 410 includes three ionization catalyst cartridges 411a, 411b and 411c.

The mixed oil may be allowed to pass through the ionization catalyst group 410 in the order of the first ionization catalyst cartridge 411a, the second ionization catalyst cartridge 411b and then the third ionization catalyst cartridge 411c.

By way of example, referring to **FIG. 7**, the mixed oil may pass through the ionization catalyst groups 410 twice. That is, after the mixed oil may pass through a first ionization catalyst cartridge 411a, a second ionization catalyst cartridge 411 and a third ionization catalyst cartridge 411c of a first ionization catalyst group 410 in sequence, the mixed oil may then be made to pass through a first ionization catalyst cartridge 411a, a second ionization catalyst cartridge 411 and a third ionization catalyst cartridge 411c of a second ionization catalyst group 410 in sequence.

Further, the first ionization catalyst cartridge 411a serves to cause ionization of carbons included in the oil in the mixed oil. Through the ionization, adsorption of hydrogen in the water and the carbon in the oil can be facilitated.

An ionization catalyst accommodated in the first ionization catalyst cartridge 411a may be prepared by adding copper ions, silver ions, carbon ions and tourmaline to basic catalyst materials including alumina, silica gel, germanium, magnesia, magnesium, titanium oxide, Tomuro stone, zeolite, lithium ore and vanadium, and then by ceramizing the mixture. The ionization catalysts included in the first ionization catalyst cartridge 411a may be referred to as an ionizing catalyst.

The second ionization catalyst cartridge 411b serves to couple carbon components included in the oil in the mixed oil and hydrogen components in the water in the mixed oil. For example, the carbon components included in the oil in the mixed oil may be carbons ionized while passing through the first ionization catalyst cartridge 411a. Further, the hydrogen components included in the water in the mixed oil may be hydrogen ionized as the water in the water tank is pretreated as stated above.

An ionization catalyst accommodated in the second ionization catalyst cartridge 411a may be prepared by adding hydrogen ions, carbon ions and active oxygen species to the basic catalyst materials including alumina, silica gel, germanium, magnesia, magnesium, titanium oxide, Tomuro stone, zeolite, lithium ore and vanadium, and then by ceramizing the mixture. The ionization catalysts included in the second ionization catalyst cartridge 411b may be referred to as a hydrogenating catalyst.

The third ionization catalyst cartridge 411c serves to stabilize the mixed oil having passed through the first and second ionization catalyst cartridges 411a and 411b.

To stabilize the mixed oil, the third ionization catalyst cartridge 411c may serve to coat a molecular structure of the mixed oil obtained while the mixed oil passes through the second ionization catalyst cartridge 411b, thus allowing that molecular structure to be maintained.

An ionization catalyst accommodated in the third ionization catalyst cartridge 411c may be prepared by adding titanium powder to the basic catalyst materials including alumina, silica gel, germanium, magnesia, magnesium, titanium oxide, Tomuro stone, zeolite, lithium ore and vanadium, and then by ceramizing the mixture. The ionization catalysts included in the third ionization catalyst cartridge 411a may be referred to as a coating catalyst.

The mixed oil is converted to a reformed fuel while it passes through the ionization catalyst unit 400 as described above.

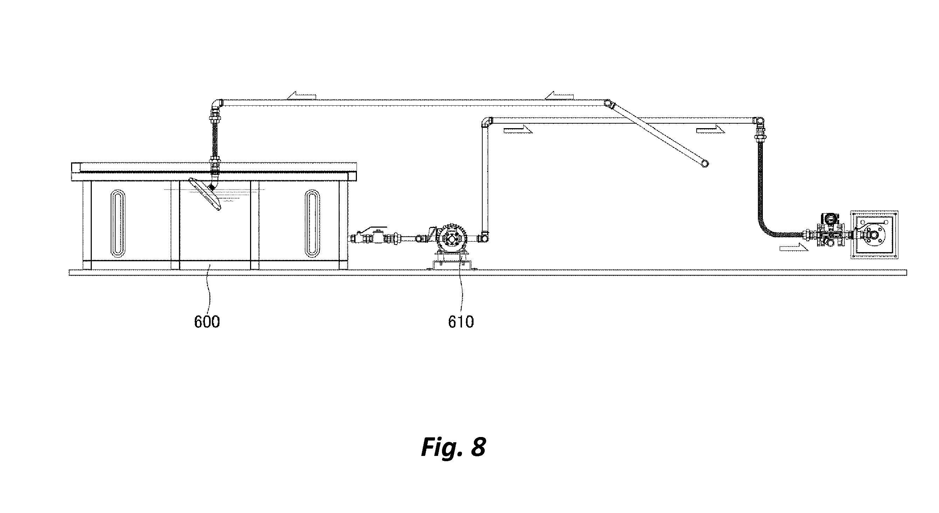

Referring to **FIG. 8****,** the present reformed fuel manufacturing apparatus 10 may include a reformed fuel storage tank 600 that stores therein the reformed fuel produced through the ionization catalyst unit 400.

Further, as shown in **FIG. 8****,** the present reformed fuel manufacturing apparatus 10 may further include a feedback pump 540 connected to the reformed fuel storage tank 600 and configured to extract non-reformed mixed oil and send it back to the mixing tank 300. The mixed oil returned back into the mixing tank 300 is re-subjected to a mixing process in the mixing tank 300 and an ionization catalyst reaction in the ionization catalyst unit 400 repeatedly until the mixed oil is converted to a reformed fuel completely. That is, the present reformed fuel manufacturing apparatus 10 is capable of preventing, through this post-treatment, non-reformed mixed oil from being mixed into the completely reformed reformed fuel. That is, among the fluids in the reformed fuel storage tank 600, only the reformed fuel can be transported to the outside (outlet) through a reformed fuel transport pump 610, and the reformed fuel transported to the outside may be outputted as a final product of the present reformed fuel manufacturing apparatus.

Now, a method for manufacturing a reformed fuel in accordance with the present example embodiment (hereinafter, simply referred to as "the present reformed fuel manufacturing method") will be elaborated. The present reformed fuel manufacturing method is directed to producing a reformed fuel by using the present reformed fuel manufacturing apparatus as described above. Parts identical or similar to those described in the present reformed fuel manufacturing apparatus will be assigned same reference numerals, and redundant description will be simplified or omitted.

The present reformed fuel manufacturing method includes block S10 for preparing pretreated water by pretreating water supplied into the water tanks 100 by using a water tank catalyst.

At block S10, the water tank catalyst may include a first water tank catalyst containing tourmaline mineral; and a second water tank catalyst containing at least one of silicon dioxide, silicate mineral and halogen mineral. This is the same as that described in the reformed fuel manufacturing apparatus, and, thus, detailed description thereof will be omitted.

Further, the present reformed fuel manufacturing method includes block S20 for preparing pretreated oil by pretreating oil supplied into the oil tanks 200 by using an oil tank catalyst.

At block S20, the oil tank catalyst may include a first oil tank catalyst containing tourmaline mineral; and a second oil tank catalyst containing at least one of silicon dioxide, silicate mineral and halogen mineral. This is the same as that described in the reformed fuel manufacturing apparatus, and, thus, detailed description thereof will be omitted.

Further, the present reformed fuel manufacturing method includes block S30 for producing a mixed oil by agitating the pretreated water from the water tanks 100 and pretreated oil from the oil tanks 300.

Within the mixing tank 300, the water and the oil are mixed with each other by being agitated. Accordingly, the water and the oil can be uniformly mixed without being separated, so that mixed oil is obtained.

Further, the present reformed fuel manufacturing method further includes a block S40 for converting the mixed oil from the mixing tank 300 to a reformed fuel by using an ionization catalyst within the ionization catalyst unit 400.

As stated above, the ionization catalyst may be accommodated in the ionization catalyst unit 400. The ionization catalyst unit 400 may include one or more ionization catalyst groups 410, and each ionization catalyst group 410 may include the multiplicity of ionization catalyst cartridges 411. Since the ionization catalyst and the configuration/operation of the ionization catalyst unit 400 are already discussed in the description of the present reformed fuel manufacturing apparatus, detailed description thereof will be omitted.

Meanwhile, the reformed fuel manufacturing method may further include, after block S40, block S40 for storing, in the reformed fuel storage tank 600, the reformed fuel which is produced through block S40.

Moreover, the present reformed fuel manufacturing method may further include block S60 for extracting non-reformed mixed oil from the reformed fuel storage tank 600 and send the non-reformed mixed oil back into the mixing tank 300 by using the feedback pump 540, while discharging the completely reformed reformed fuel to the outside by using the reformed fuel transport pump 610.

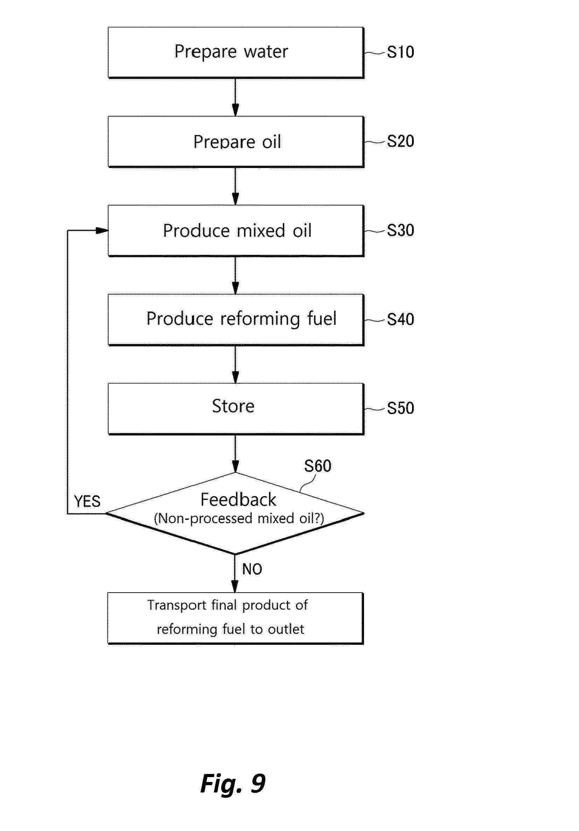

Referring to **FIG. 9****,** in case that non-reformed mixed oil exists in the reformed fuel storage tank 600, the non-reformed mixed oil is returned back into the mixing tank 300 at block S60 so as to be subjected to the processes of blocks S30 to S50 again. Further, at block S60, the completely reformed reformed fuel within the reformed fuel storage tank 600 is transported to the outlet through the reformed fuel transport pump 610.

Through the post-treatment as in block S60, the mixed oil yet to be completely processed may be subjected to a mixing process and an ionization catalyst reaction repeatedly. Thus, the non-processed mixed oil can be prevented from being mixed into the final product of the reformed fuel.

The above description of the illustrative embodiments is provided for the purpose of illustration, and it would be understood by those skilled in the art that various changes and modifications may be made without changing technical conception and essential features of the illustrative embodiments. Thus, it is clear that the above-described illustrative embodiments are illustrative in all aspects and do not limit the present disclosure. For example, each component described to be of a single type can be implemented in a distributed manner. Likewise, components described to be distributed can be implemented in a combined manner.

The scope of the inventive concept is defined by the following claims and their equivalents rather than by the detailed description of the illustrative embodiments. It shall be understood that all modifications and embodiments conceived from the meaning and scope of the claims and their equivalents are included in the scope of the inventive concept.

## Claims

1. A reformed fuel manufacturing apparatus, comprising:
one or more water tanks configured to pretreat introduced water by using a water tank catalyst;
one or more oil tanks configured to pretreat introduced oil by using an oil tank catalyst;
a mixing tank connected to the one or more water tanks and the one or more oil tanks, and configured to produce a mixed oil by agitating the pretreated water introduced from the one or more water tanks and the pretreated oil introduced from the one or more oil tanks; and
an ionization catalyst unit connected to the mixing tank and configured to convert the mixed oil, which is introduced from the mixing tank, to a reformed fuel by using an ionization catalyst.

2. The reformed fuel manufacturing apparatus of Claim 1,
wherein the water tank catalyst includes:
a first water tank catalyst containing a tourmaline mineral; and
a second water tank catalyst containing at least one of silicon dioxide, a silicate mineral and a halogen mineral.

3. The reformed fuel manufacturing apparatus of Claim 1,
wherein the oil tank catalyst includes:
a first oil tank catalyst containing a tourmaline mineral; and
a second oil tank catalyst containing at least one of silicon dioxide, a silicate mineral and a halogen mineral.

4. The reformed fuel manufacturing apparatus of Claim 1,
wherein the ionization catalyst contains alumina, silica gel, germanium, magnesia, magnesium, titanium oxide, Tomuro stone, zeolite, lithium ore and vanadium.

5. The reformed fuel manufacturing apparatus of Claim 1, further comprising:
a reformed fuel storage tank configured to store therein the reformed fuel produced through the ionization catalyst unit; and
a feedback pump connected to the reformed fuel storage tank, and configured to extract a non-reformed mixed oil from the reformed fuel storage tank and send the non-reformed mixed oil back to the mixing tank.

6. The reformed fuel manufacturing apparatus of Claim 1,
wherein the number of the one or more water tanks is more than the number of the one or more oil tanks.

7. The reformed fuel manufacturing apparatus of Claim 1, further comprising:
a mixed oil supply line through which the pretreated water and the pretreated oil are supplied into the mixing tank while being mixed with each other;
a water supply line through which the pretreated water from the one or more water tanks is supplied into the mixed oil supply line; and
an oil supply line through which the pretreated oil from the one or more oil tanks into the mixed oil supply line.

8. The reformed fuel manufacturing apparatus of Claim 7,
wherein the water supply line comprises a water flowmeter configured to measure a flow rate of the water passing through the water supply line; and
the oil supply line comprises an oil flowmeter configured to measure a flow rate of the oil passing through the oil supply line.

9. The reformed fuel manufacturing apparatus of Claim 7,
wherein the mixed oil supply line comprises an inline water and oil mixer having a multiple number of protrusions on an inner surface thereof to produce turbulence in the water and the oil passing through the mixed oil supply line; and
the water supply line comprises an inline water mixer having a multiple number of protrusions on an inner surface thereof to produce turbulence in the water passing through the water supply line; and
the oil supply line comprises an inline oil mixer having a multiple number of protrusions on an inner surface thereon to produce turbulence in the oil passing through the oil supply line.

10. The reformed fuel manufacturing apparatus of Claim 1,
wherein the ionization catalyst unit comprises one or more ionization catalyst groups,
each of the one or more ionization catalyst group comprises a plurality of ionization catalyst cartridges for allowing the mixed oil to pass therethrough in sequence, and
each ionization catalyst cartridge accommodates therein the ionization catalyst.

11. The reformed fuel manufacturing apparatus of Claim 10,
wherein the one or more ionization catalyst groups is plural in number and are connected to each other in series or in combination of in series and in parallel.

12. The reformed fuel manufacturing apparatus of Claim 10,
wherein each of the plurality of ionization catalyst cartridges comprises:
a first ionization catalyst cartridge configured to cause ionization of carbon contained in the oil in the mixed oil;
a second ionization catalyst cartridge configured to cause a carbon component contained in the oil in the mixed oil to be coupled to a hydrogen component contained in the water in the mixed oil; and
a third ionization catalyst cartridge configured to stabilize the mixed oil having passed through the first ionization catalyst cartridge and the second ionization catalyst cartridge, optionally
wherein the mixed oil is allowed to pass through the first ionization catalyst cartridge, the second ionization catalyst cartridge and the third ionization catalyst cartridge in sequence.

13. The reformed fuel manufacturing apparatus of Claim 12,
wherein the ionization catalyst contains alumina, silica gel, germanium, magnesia, magnesium, titanium oxide, Tomuro stone, zeolite, lithium ore and vanadium as basic catalyst materials,
the ionization catalyst accommodated in the first ionization catalyst cartridge is prepared by adding an copper ion, a silver ion, a carbon ion and tourmaline to the basic catalyst materials and ceramizing the mixture,
the ionization catalyst accommodated in the second ionization catalyst cartridge is prepared by a hydrogen ion, a carbon ion and active oxygen species to the basic catalyst materials and ceramizing the mixture, and
the ionization catalyst accommodated in the third ionization catalyst cartridge is prepared by adding titanium powder to the basic catalyst materials.

14. A reformed fuel manufacturing method, comprising:
preparing pretreated water by pretreating water supplied in a water tank by a water tank catalyst;
preparing pretreated oil by pretreating oil supplied in an oil tank by an oil tank catalyst;
producing a mixed oil by agitating, in a mixing tank, the pretreated water introduced from the water tank and the pretreated oil introduced from the oil tank; and
converting, in an ionization catalyst unit, the mixed oil introduced from the mixing tank to a reformed fuel by using an ionization catalyst.

15. The reformed fuel manufacturing method of Claim 14, further comprising:
storing the reformed fuel, which is produced in the process of converting the mixed oil to the reformed fuel by using the ionization catalyst, in a reformed fuel storage tank; and
extracting a non-reformed mixed oil from the reformed fuel storage tank and send the non-reformed mixed oil back to the mixing tank by using a feedback pump connected to the reformed fuel storage tank and configured to extract the non-reformed mixed oil from the reformed fuel storage tank and send the non-reformed mixed oil back to the mixing tank, and discharging the reformed fuel to the outside by using a reformed fuel transport pump.
